# EUROPÄISCHE PATENTSCHRIFT

(11) **EP 0 960 803 B1**
(45) Veröffentlichungstag und Bekanntmachung des Hinweises auf die Patenterteilung: **13.08.2003**
(21) Anmeldenummer: 99117537.3
(22) Anmeldetag: 04.03.1998
(51) Int. Cl.: B62D 65/00

(54) **Fahrzeugdach**
Vehicle roof
Toit de véhicule

(30) Priorität: 06.03.1997 DE 19709016
(43) Veröffentlichungstag der Anmeldung: 01.12.1999
(62) Teilanmeldung aus: 98916841.4
(73) Patentinhaber: ArvinMeritor GmbH, 63128 Dietzenbach (DE)
(72) Erfinder: Böhm, Horst, 60599 Frankfurt (DE); Grimm, Rainer, 60599 Frankfurt (DE); Becher, Thomas, 63110 Rodgau (DE)
(74) Vertreter: Oppermann, Mark, Dipl.-Ing.

(56) Entgegenhaltungen:
- DE-A- 3 429 880
- DE-C- 3 940 503
- FR-A- 2 529 844
- US-A- 4 358 883

## Beschreibung

Die Erfindung bezieht sich auf ein Fahrzeugdach, insbesondere Kraftfahrzeugdach, entsprechend dem Oberbegriff des Patentanspruchs 1.

Bei herkömmlichen Fahrzeugkarosserien ist das Fahrzeugdach, das eine Dachöffnung aufweisen kann, der ein verlagerbarer Deckel oder ein Faltdach zugeordnet sein kann, ein fester in die Karosserie integrierter Bestandteil, der sich unmittelbar an die Säulen der Karosserie anschließt. Bei derartigen Karosserien sind der Dachhimmel und ggf. weitere Verkleidungsteile sowie andere im Dachbereich anzubringende Fahrzeugteile, insbesondere Schiebe- oder Faltdachelemente nachträglich und vorwiegend vom Fahrzeuginnenraum her zu montieren (vergl. DE-A-44 28 913 ). Gemäß diesem Stand der Technik ist insbesondere ein Schiebedachrahmen vorgesehen, der mittels Kleberaupen nachträglich von innen an das feste Fahrzeugdach bzw. die Dachholme angeklebt wird und selbst unmittelbar eine Wasserrinne zur Abfuhr von Regenwasser bildet.

Es sind aber auch bereits Fahrzeugdächer vorgeschlagen worden, die als Module getrennt von der Fahrzeugkarosserie hergestellt und mit ihren Außenrändern auf einen an den Karosseriesäulen angebrachten Karosserierahmen aufgelegt und mit diesem durch Kleben oder Schrauben fest verbunden werden (z.B. EP-A-0 075 754 ). In diesem Zusammenhang wird in der gattungsbildenden DE-A-28 45 708 ein Fahrzeugdach ohne Schiebedacheinheit offenbart, das als vorgeformte Sandwichplatte ausgebildet ist, die an der Außenseite eine Dachhaut und an der Innenseite ein Polsterund/oder Bezugsmaterial als Dachhimmel aufweist. Durch die Vormontage werden die Montagezeiten am Endmontageband verkürzt. Bei diesem Stand der Technik bildet eine separate, den freiliegenden Außenrand der Sandwichplatte überdeckende Abdeckleiste zusammen mit einem Steg der seitlichen Dachholme eine Regenrinne aus.

Der Erfindung liegt ausgehend vom gattungsbildenden Stand der Technik die Aufgabe zugrunde, ein hinsichtlich insbesondere des Montageaufwands vereinfachtes Fahrzeugdach zur Aufnahme einer Schiebedacheinheit bereitzustellen, bei dem auch eine Dachentwässerung auf einfache Weise gewährleistet wird.

Die gestellte Aufgabe wird erfindungsgemäß durch die Merkmale des Patentanspruchs 1 gelöst. Vorteilhafte bzw. zweckmäßige Weiterbildungen der Erfindung sind Gegenstand der Patentansprüche 2 bis 5.

Gemäß der Erfindung ist bei einem Fahrzeugdach, insbesondere Kraftfahrzeugdach, das sandwichartig mit einer Dachhaut ausgebildet, getrennt von einer Fahrzeugkarosserie herstellbar, mit seinen Dachrändern auf einen Karosserierahmen auflegbar und mit diesem fest verbindbar ist, die zur Aufnahme eines Schiebedeckels mit einer Dachöffnung versehene Dachhaut mit einem Schaumkunststoff ausgeschäumt, wobei in der Schaumschicht ein Schlauch- oder Rohrstück eingebettet ist, mittels dessen über den Randspalt zwischen der Dachhaut und dem Schiebedeckel eintretendes und von einem unterhalb der Dachhaut befestigten Schiebedachrahmen aufgefangenes Wasser nach außen ableitbar ist, wobei das Schlauch- oder Rohrstück einerseits auf eine Abflußtülle des Schiebedachrahmens dicht aufgesteckt ist und andererseits mit einer Öffnung an der Außenkante des Fahrzeugdachs endet, und wobei das Schlauch- oder Rohrstück an der Außenkante des Fahrzeugdachs in eine Wasserablauffuge mündet, die zwischen einem Außenrand der Dachhaut und der ihm zugekehrten Fläche des Karosserierahmens gebildet ist.

In einer Weiterbildung der Erfindung entsprechend dem Patentanspruch 2 ist das Schlauch- oder Rohrstück in einem Eckbereich des Schiebedachrahmens in der an der Dachhaut angebrachten Schaumschicht eingebettet.

Nach der Lehre des Patentanspruchs 3 ist in der an der Dachhaut angebrachten Schaumschicht ein die Dachöffnung umgebender Verstärkungsrahmen eingebettet, an dem der Schiebedachrahmen befestigt ist. Dabei weist der Schiebedachrahmen einen Flansch auf, der an einer unteren Fläche des Verstärkungsrahmens unmittelbar flächig anliegt und der Befestigung des Schiebedachrahmens an dem Verstärkungsrahmen dient, wie im Patentanspruch 4 angegeben.

Schließlich handelt es sich gemäß dem Patentanspruch 5 bei dem Schaumkunststoff um einen PUR-Schaumstoff.

Weitere Einzelheiten der Erfindung werden anhand der unterschiedliche Ausführungsformen darstellenden Zeichnungen näher erläutert. Darin zeigt:
- Fig. 1: eine schematische Perspektivansicht eines schon an einer PKW-Karosserie angebrachten Fahrzeugdachs, ohne Schiebedach, nicht zur Erfindung gehörend,
- Fig. 2: eine der Fig. 1 entsprechende Perspektivansicht, jedoch mit einer in das Fahrzeugdach eingebauten Schiebedacheinheit,
- Fig. 3: einen abgebrochenen Schnitt entsprechend der Linie III-III in Fig. 1, nicht zur Erfindung gehörend,
- Fig. 4: einen abgebrochenen Schnitt entsprechend der Linie IV-IV in Fig. 1, nicht zur Erfindung gehörend,
- Fig. 5: einen abgebrochenen Schnitt entsprechend der Linie V-V in Fig. 1, nicht zur Erfindung gehörend,
- Fig. 6: einen der Fig. 3 ähnlichen Schnitt betreffend ein weiteres Fahrzeugdach nicht zur Erfindung gehörend,
- Fig. 7: einen der Fig. 4 ähnlichen Schnitt betreffend das Fahrzeugdach gemäß Fig.6, nicht zur Erfindung gehörend,
- Fig. 8: einen der Fig. 5 ähnlichen Schnitt betreffend das Fahrzeugdach gemäß den Fig. 6 und 7, nicht zur Erfindung gehörend,
- Fig. 9: einen abgebrochenen Schnitt entsprechend der Linie IX-IX in Fig. 2 betreffend eine Ausführungsform der Erfindung mit eingebautem Schiebedach,
- Fig. 10: einen abgebrochenen Schnitt entsprechend der Linie X-X in Fig. 2 betreffend die Ausführungsform der Erfindung gemäß Fig.9,
- Fig. 11: einen abgebrochenen Schnitt entsprechend der Linie XI-XI in Fig. 2 betreffend die Ausführungsform der Erfindung gemäß Fig.9,
- Fig. 12: einen abgebrochenen Schnitt entsprechend der Linie XII-XII in Fig. 2 betreffend die Ausführungsform der Erfindung gemäß Fig. 9,
- Fig. 13: einen der Fig. 5 ähnlichen Schnitt die nur mit dieser Fig. gezeigte Ausführungsform ist nicht Bestandteil der Erfindung,
- Fig. 14: einen der Fig. 5 ähnlichen Schnitt betreffend ein nur in den Fig. 14 und 15 gezeigtes Fahrzeugdach, nicht zur Erfindung gehörend,
- Fig. 15: einen der Fig. 14 ähnlichen Schnitt betreffend ein anderes Ausstattungsdetail des Fahrzeugdachs gemäß Fig. 14, nicht zur Erfindung gehörend,
- Fig. 16A: eine das Montageverfahren erläuternde Perspektivdarstellung des Fahrzeugdachs vor dem Einbau, nicht zur Erfindung gehörend,
- Fig. 16B: das Fahrzeugdach gemäß Fig. 16A, jedoch einbaufertig mit nach unten umgebogenen Bereichen des Dachhimmels bzw. der Innenschale und
- Fig. 16C: eine Perspektivansicht der PKW-Karosserie vor der Dachmontage, nicht zur Erfindung gehörend.

Zur näheren Erläuterung des Fahrzeugdachs wird zunächst auf die Fig. 3 bis 5, die nicht Bestandteil der Erfindung sind, Bezug genommen. Das daraus ersichtliche Fahrzeugdach besteht aus einer aus einem metallischen Werkstoff, z.B. Stahlblech geformten Außenschale oder Dachhaut 1 und einer damit sandwichartig verbundenen Innenschale 2, die aus einem Schaumkunststoff, beispielsweise einem PUR-Schaumstoff gebildet ist. Die Innenfläche der Innenschale 2 ist zur Ausbildung des Dachhimmels mit einem textilen oder folienartigen Bezugsmaterial 3 beschichtet. Wie bei allen hier gezeichneten und beschriebenen Schnittdarstellungen ist der Einbauzustand des Fahrzeugdachs dargestellt, bei dem die Außenränder des Dachs auf den Karosserierahmen 4 aufgelegt sind. In Fig. 3 ist der vordere Querholm, in Fig. 4 der hintere Querholm und in Fig. 5 einer der Seitenholme des Karosserierahmens 4 dargestellt.

Die Innenschale 2 ist im Bereich der zur Auflage auf den Karosserierahmen 4 vorgesehenen Außenränder in zwei Schichten aufgeteilt, von denen die obere Schicht 5 auf den Karosserierahmen 4 aufgelegt ist, während die untere Schicht 6 über die Außenränder des Fahrzeugdachs übersteht. Die untere Schicht 6 ist für den Durchtritt durch die von dem Karosserierahmen 4 begrenzte Karosserieöffnung nach unten ohne bleibende Deformation umbiegbar, wie das in den Fig. in strichpunktierten Linien angedeutet ist. Diese nach unten umbiegbare untere Schicht 6 ist an die nach unten bzw. innen weisenden Flächen des Karosserierahmens 4 angelegt und auf noch zu beschreibende Weise befestigt.

Die obere Schicht 5 ist im Bereich ihrer Auflage auf den Karosserierahmen 4 mit in den Schaumstoff eingeformten Aufnahmenuten 7 für Klebstoff 8 versehen. Auf diese Weise ist das Fahrzeugdach fest mit dem Karosserierahmen 4 verbunden. Im vorderen Bereich ist auf eine Abkantung der Außenschale 1 ein Lippenprofil 9 aufgesteckt, das der Windschutzscheibe 10 anliegt. Die untere Schicht 6 verkleidet den Karosserierahmen 4 vollständig und ist in ihrem vorderen Bereich mit Vertiefungen 11 versehen, welche schwenkbare Sonnenblenden 12 aufnehmen. Die Schwenklagerböcke 13 der Sonnenblenden 12 sind in entsprechende Ausnehmungen in der unteren Schicht 6 und dem Bezugsmaterial 3 verrastet, was eine Vormontage der Sonnenblenden an der Innenschale ermöglicht. Nach dem Verkleiden des Karosserierahmens 4 werden durch die Schwenklagerböcke hindurch Befestigungsschrauben 14 in den Karosserierahmen 4 eingeschraubt.

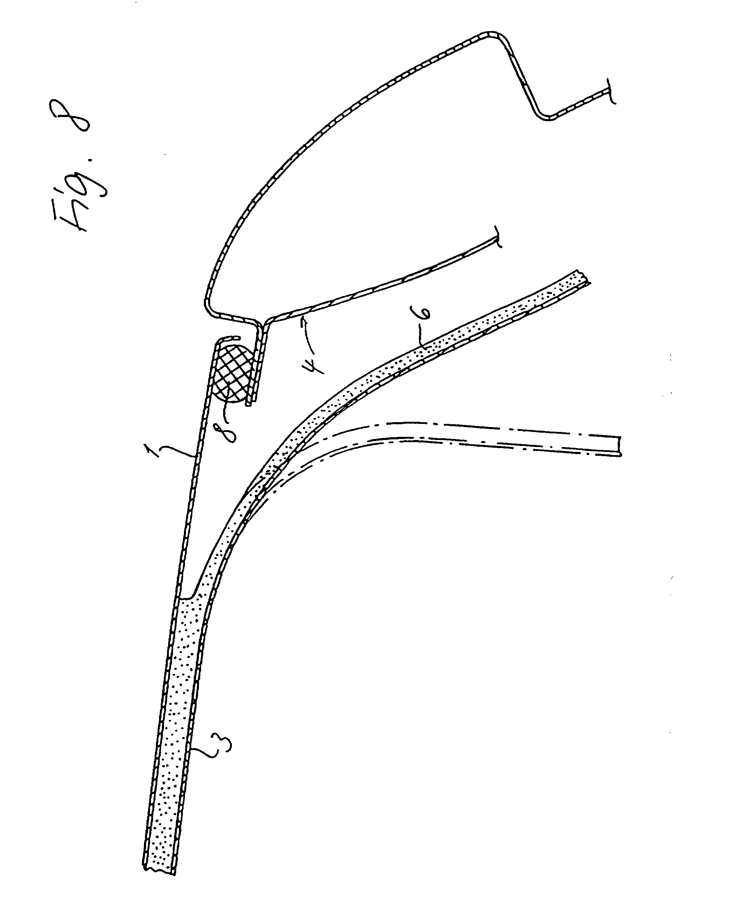

An den aus Fig. 4 ersichtlichen hinteren Querholm des Karosserierahmens 4 ist die untere Schicht 6 angelegt und mit diesem über einen sowohl auf einen Flansch des Querholms als auch auf den Außenrand der unteren Schicht 6 aufgesteckten Keder 15 fest verbunden. Der in Fig. 4 in strichpunktierten Linien dargestellte Keder ist zugleich das Abdichtprofil für die bei diesem Ausführungsbeispiel vorgesehene Heckklappe 16. Wie aus Fig. 5 hervorgeht, ist an den Seiten des Fahrzeugdachs in die obere Schicht 5 ein Verstärkungsteil 17 in Form eines durchgehenden Profils in den Schaumstoff eingebettet. Die untere Fläche des Verstärkungsteils 17 liegt dem Karosserierahmen unmittelbar flächig an. Hier ist das Fahrzeugdach mit den Seitenholmen des Karosserierahmens durch Befestigungsschrauben 18 fest verbunden, die durch einen Flansch des Karosserierahmens 4 hindurchgeführt und in das Verstärkungsteil 17 eingeschraubt sind. Diese Befestigung erfolgt vor der Verkleidung des Karosserierahmens 4 mit der unteren Schicht 6 der Innenschale 2, die auch in Fig. 5 in strichpunktierten Linien nach unten umgebogen dargestellt ist. Außen ist in den Schaumstoff der oberen Schicht 5 zusätzlich eine Aufnahmenut 7 für Klebstoff 8 angebracht. In Fig. 5 ist auch noch dargestellt, daß in Vertiefungen 19 der unteren Schicht 6 Schwenklagerböcke 20 für Haltegriffe 21 in entsprechende Bohrungen der unteren Schicht 6 und des Bezugsmaterials 3 eingerastet sind. Auch die Haltegriffe 21 mit ihren Schwenklagerböcken 20 können daher an dem Fahrzeugdach vormontiert werden. Wie unter Bezugnahme auf Fig. 3 anhand der dort gezeigten Sonnenblenden 12 schon beschrieben wurde, werden auch bei den Haltegriffen 21 Befestigungsschrauben 22 durch die Schwenklagerböcke 20 hindurchgeführt und in den Karosserierahmen 4 eingeschraubt. Zusätzlich zu dieser Befestigung wird noch der Außenrand der unteren Schicht 6 mit einem entsprechenden Flansch des Karosserierahmens 4 durch einen hier nicht gezeigten Keder verbunden, wie er in strichpunktierten Linien in Fig. 11 an dieser Stelle angedeutet ist.

Wie aus den Fig. 3 bis 5 weiterhin hervorgeht, ist die untere Schicht 6 nicht durchweg von gleichbleibender Dicke ausgeführt, sondern entsprechend dem Stabilitäts- bzw. Polsterungsbedürfnis auch in Teilbereichen dickwandiger ausgebildet. Durch entsprechende Ausbildung der Fertigungsform lassen sich derartige unterschiedliche Schichtdicken ohne weiteres erzielen. Weiterhin ist aus den Fig. ersichtlich, daß sich zwischen der oberen Schicht 5 und der unteren Schicht 6 der Innenschale 2 zum Teil erhebliche Hohlräume befinden. Diese können als Kanäle für die Unterbringung von Kabeln, aber auch als Luftkanäle verwendet werden. Die Außenränder der nach unten umbiegbaren Bereiche der Innenschale 2 d.h. der unteren Schicht 6 bei der in Rede stehenden Ausführungsform sind entsprechend ihrer am Karosserierahmen 4 vorgesehenen Befestigung paßgerecht geschnitten bzw. vorgeformt. Die bereits erwähnten Schichtverdickungen der unteren Schicht 6 bilden, wie aus den Fig. 4 und 5 besonders deutlich hervorgeht, stoßabsorbierende Sicherheitselemente 23, die in diesen Bereichen ein direktes Auftreffen von Körperteilen der Fahrzeuginsassen auf den Karosserierahmen 4 verhindern bzw. die Folgen eines Auftreffens mildern.

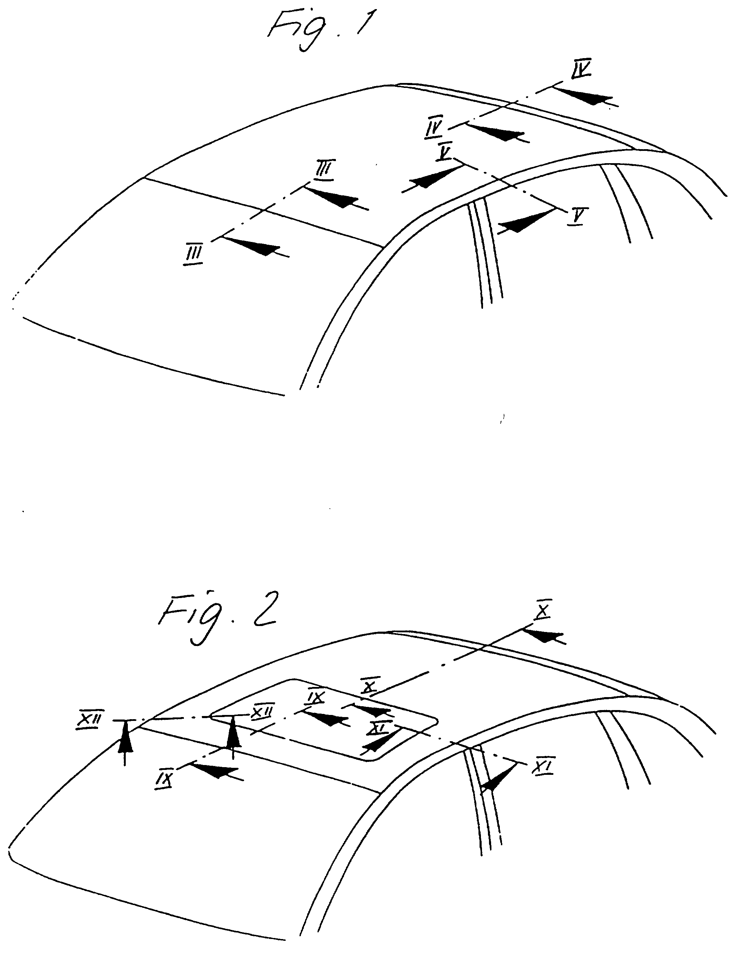

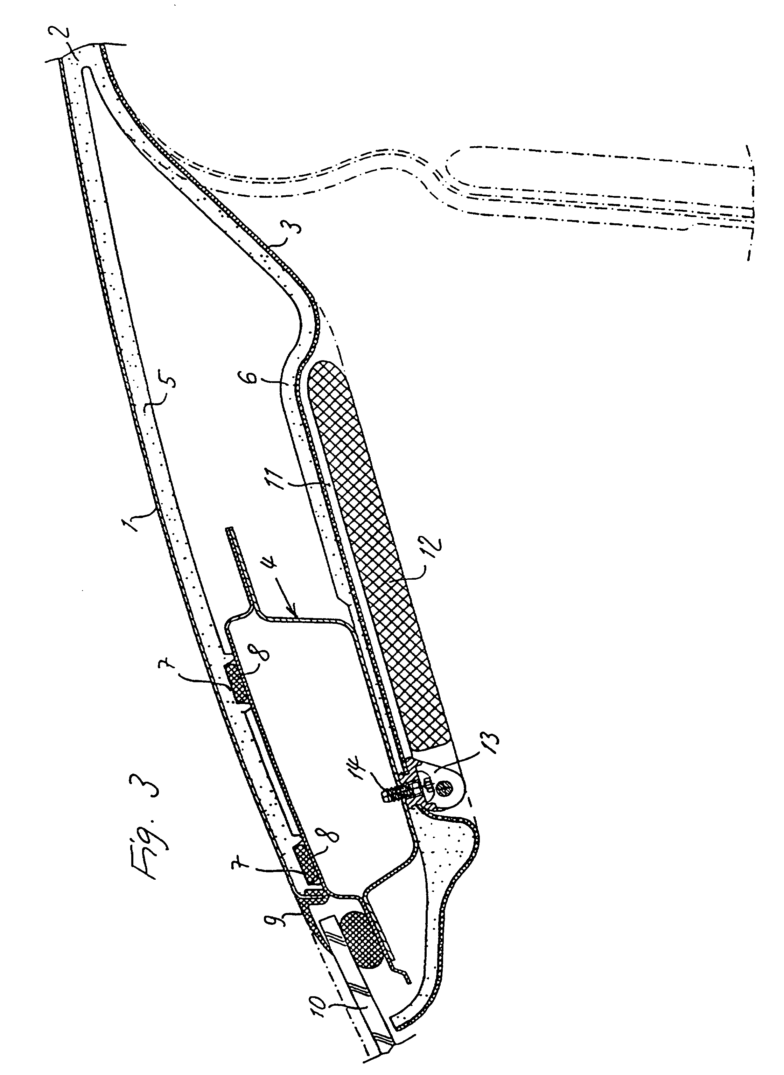

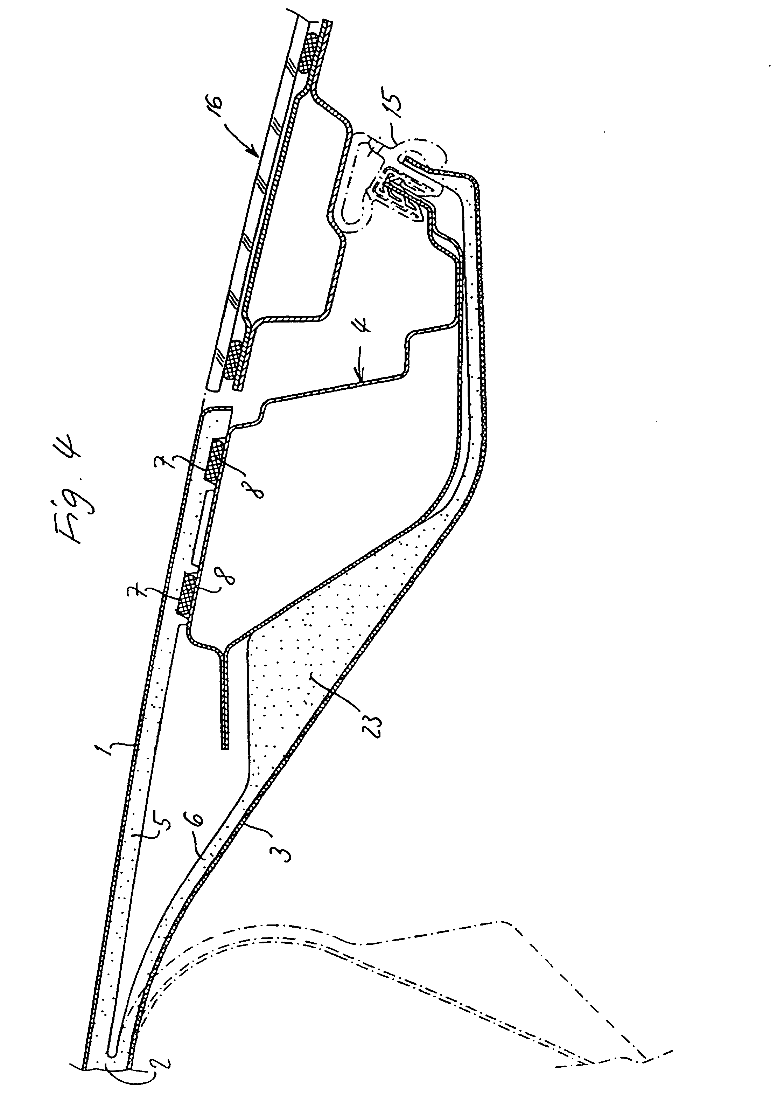

Zur näheren Erläuterung eines weiteren Fahrzeugdachs, das nicht zur Erfindung gehört, wird nunmehr auf die Fig. 6 bis 8 Bezug genommen, wobei aber lediglich auf die zu den Fig. 3 bis 5 bestehenden Unterschiede hingewiesen werden soll. Während bei dem Dach der Fig. 3 bis 5 die Innenfläche der Dachhaut 1 vollständig ausgeschäumt ist, befindet sich bei dem Dach der Fig. 6 bis 8 im Bereich der zur Auflage auf den Karosserierahmen 4 bestimmten Aüßenränder der starren Dachhaut 1 keine Ausschäumung. Die obere Schicht 5 endet vorn und hinten (Fig. 6 und 7) mit Abstand vor den Außenrändern des Fahrzeugdachs, kann in diesem Bereich aber auch völlig fehlen, so daß aus der Innenschale 2 lediglich eine dünnere untenliegende Schicht 6 weitergeführt ist, wie das aus Fig. 8 hervorgeht. Jedenfalls ist die unterhalb der Dachhaut 1 befindliche Innenschale im Bereich der Auflage auf den Karosserierahmen 4 nicht mit der Dachhaut 1 verbunden. Die über die Außenränder des Fahrzeugdachs überstehende Innenschale ist wiederum für den Durchtritt durch die von dem Karosserierahmen 4 begrenzte Karosserieöffnung nach unten ohne bleibende Deformation umbiegbar und dient der bereits beschriebenen Verkleidung des Karosserierahmens 4. Während bei dem Dach gemäß der Fig. 3 bis 5 eine feste Dachhaut 1 nicht unbedingt erforderlich ist, wenn die Innenschale 2 genügend Formstabilität aufweist, ist bei dem Dach nach den Fig. 6 bis 8 eine starre tragende Dachhaut 1 zwingend erforderlich. Die Verbindung der Dachhaut 1 und damit des gesamten Fahrzeugdachs mit dem Karosserierahmen 4 übernimmt auch hier in Raupen aufgetragener Klebstoff 8. Bei diesem Dach ist in Fig. 6 an der Teilungsstelle von oberer Schicht 5 und unterer Schicht 6 angedeutet, daß an den Umbiegungs- oder Knickstellen auf der der Himmelfläche abgelegenen Seite kerbenähnliche Vertiefungen 24 vorgesehen sein können, welche das vorübergehende Abbiegen der unteren Schicht 6 wesentlich erleichtern. Entsprechende Vertiefungen können auch bei den anderen Ausführungsformen vorgesehen sein.

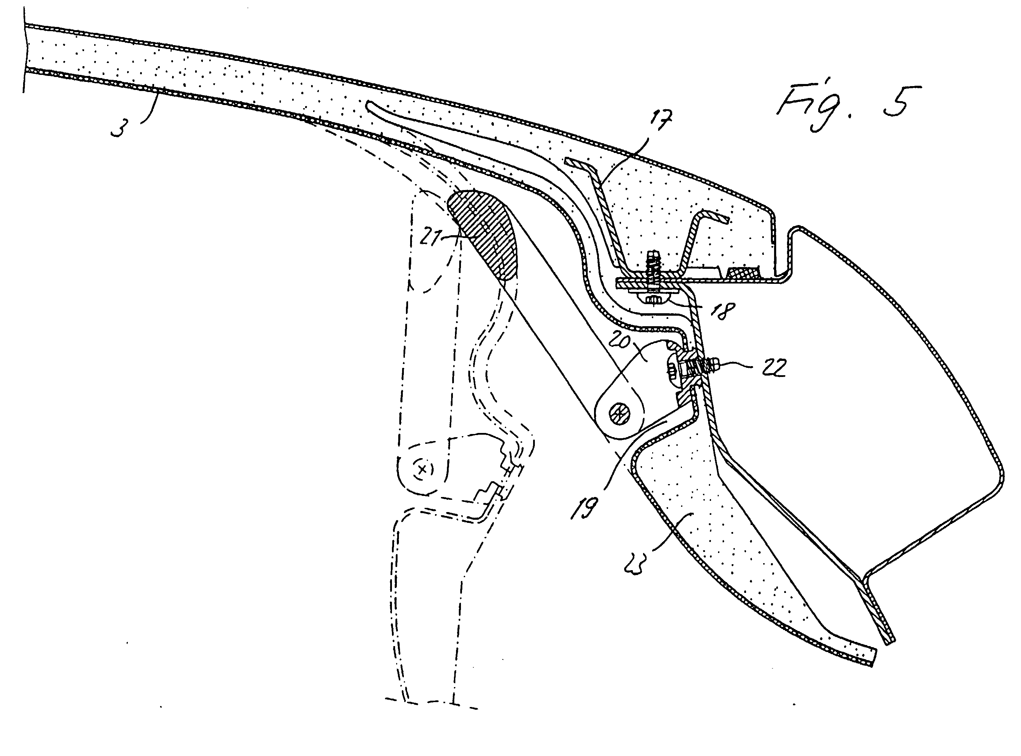

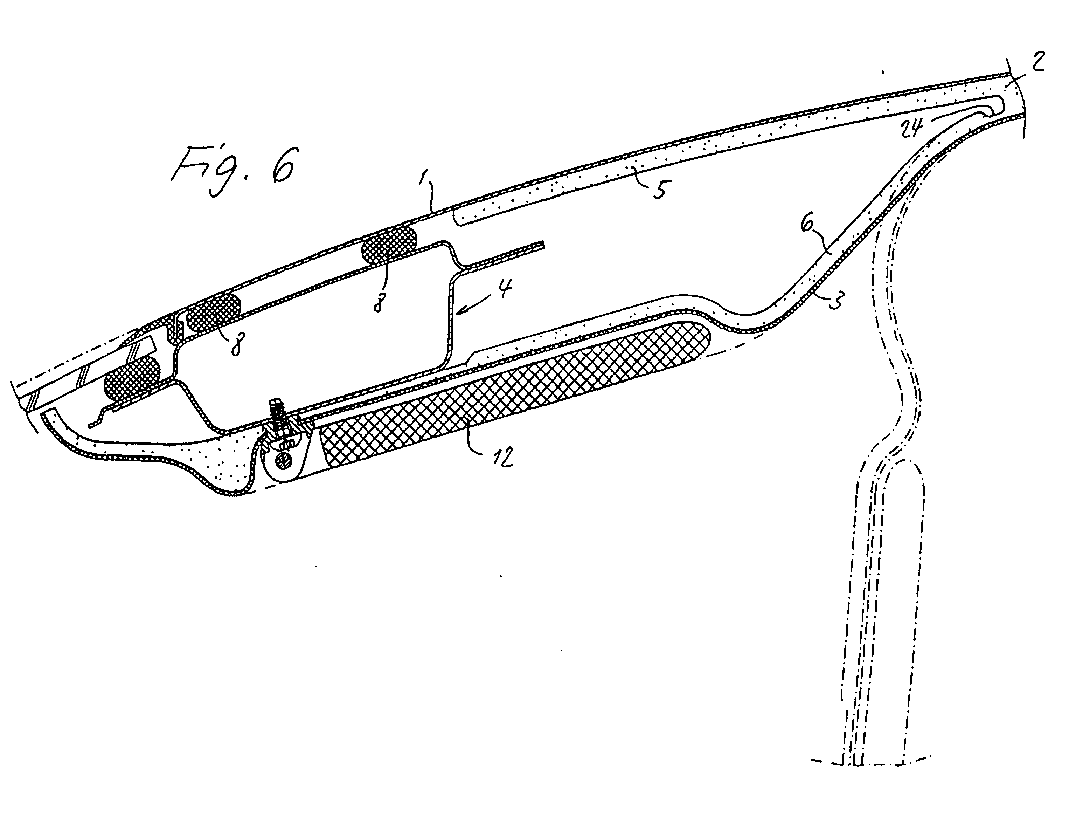

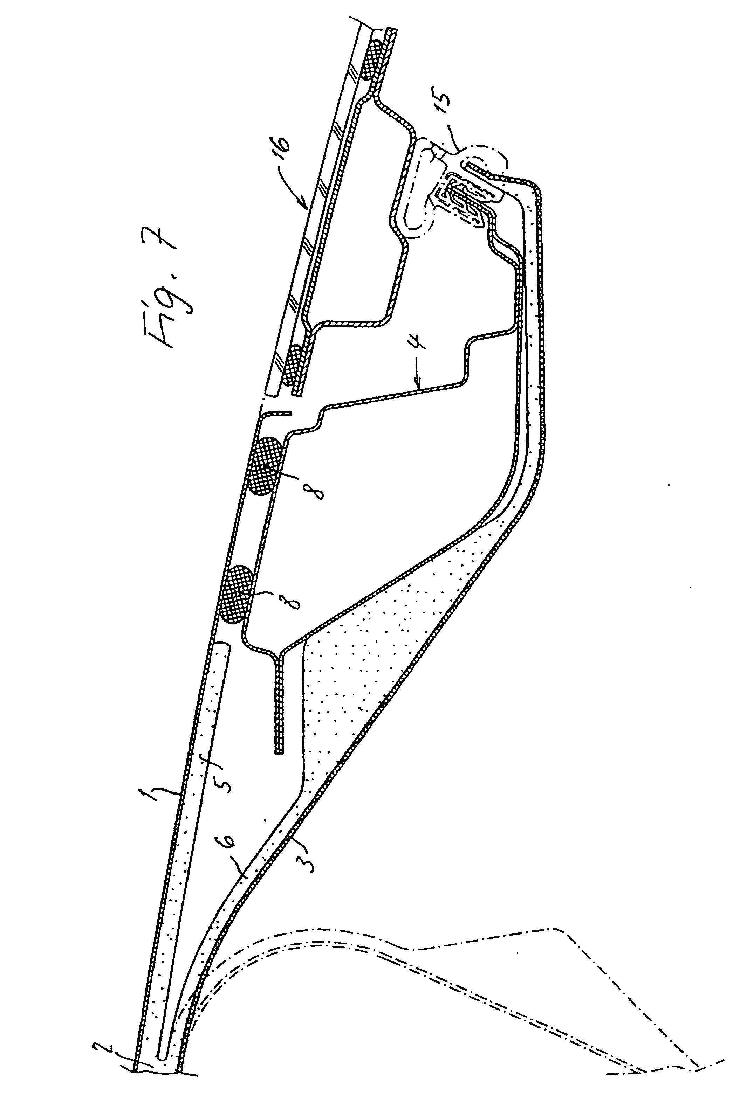

Das erfindungsgemäße Fahrzeugdach wird nunmehr anhand der Fig. 9 bis 12 näher beschrieben. Die Besonderheit dieser Ausführungsform besteht darin, daß sich in dem Fahrzeugdach eine vormontierte Schiebedacheinheit befindet. Von dieser sind in den genannten Fig. im wesentlichen der Schiebedachrahmen 25, der beispielsweise als Glasdeckel ausgebildete Schiebedeckel 26, das Randspaltabdichtungsprofil 27 und ein die in der festen Dachhaut 1 angebrachte Dachöffnung umgebender Verstärkungsrahmen 28 dargestellt. Im gezeichneten Beispiel ist die feste Dachhaut 1 ausgeschäumt und auf die schon beschriebene Weise mit ihren Randbereichen auf den Karosserierahmen 4 aufgelegt und damit fest verbunden. Bei dieser Ausführungsform ist der als Innenschale 29 vorgeformte Dachhimmel mit Abstand zu der starren Dachhaut 1 an dem unterhalb der Dachhaut 1 befestigten Schiebedachrahmen 25 angebracht. Die wiederum über die Außenränder des Fahrzeugdachs überstehende Innenschale 29 ist für den Durchtritt durch die von dem Karosserierahmen 4 begrenzte Karosserieöffnung nach unten ohne bleibende Deformation umbiegbar und zur Verkleidung des Karosserierahmens 4 und des Schiebedachrahmens 25 ausgebildet. Während die Anbringung und Befestigung der Innenschale 29 an dem Karosserierahmen 4 auf die schon beschriebene Weise erfolgt, übernimmt die Befestigung der Innenschale 29 an dem Schiebedachrahmen 25 ein Aufsteckkeder 30, der sowohl auf einen Flansch des Schiebedachrahmens 25 als auch auf den Öffnungsrand der Innenschale 29 aufgesteckt ist, wie das aus den Fig. 9, 10 und 12 hervorgeht. In diesen Fig. ist auch die nach unten umgebogene Montagelage der Innenschale 29 in strichpunktierten Linien dargestellt. Während in den Fig. 9, 10 und 12 durch Weglassen des Bezugsmaterials 3 angedeutet ist, daß die Innenschale 29 an ihrer dem Fahrzeuginnenraum zugekehrten Fläche auch ohne Bezugsmaterial ausgeführt sein kann, veranschaulicht die zu dieser Ausführungsform gehörende Fig. 11 aber, daß auch hier Bezugsmaterial 3 vorhanden sein kann.

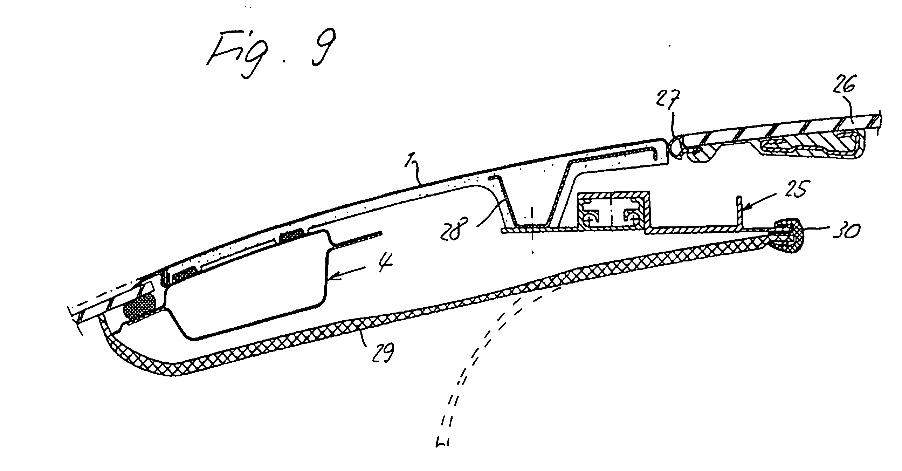

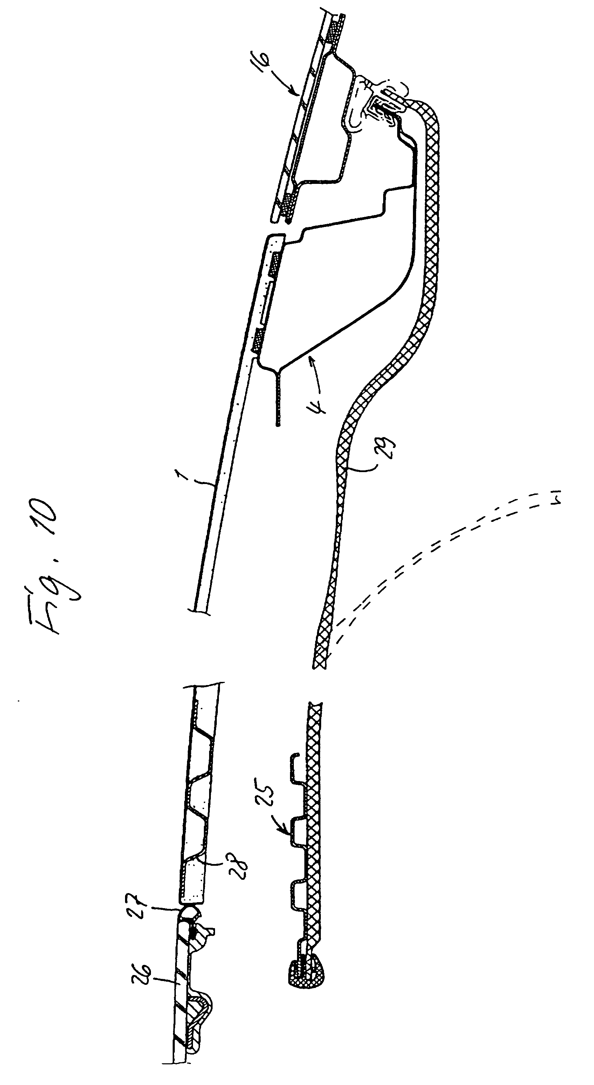

Aus Fig. 12 geht hervor, auf welche Weise über den Randspalt zwischen der festen Dachhaut 1 und dem Schiebedeckel 26 eintretendes und von dem Schiebedachrahmen 25 aufgefangenes Wasser nach außen abgeleitet werden kann. Zu diesem Zweck ist in der an der Unterseite der festen Dachhaut 1 angebrachten Schaumschicht ein Schlauch- oder Rohrstück 31 eingebettet, das einerseits auf eine Abflußtülle 32 des Schiebedachrahmens 25 dicht aufgesteckt ist und andererseits mit einer Öffnung an der Außenkante des Fahrzeugdachs endet. Hier mündet das Schlauchoder Rohrstück 31 in eine Wasserablauffuge 32, die zwischen dem Außenrand der Dachhaut und der ihm zugekehrten Fläche des Karosserierahmens 4 gebildet ist.

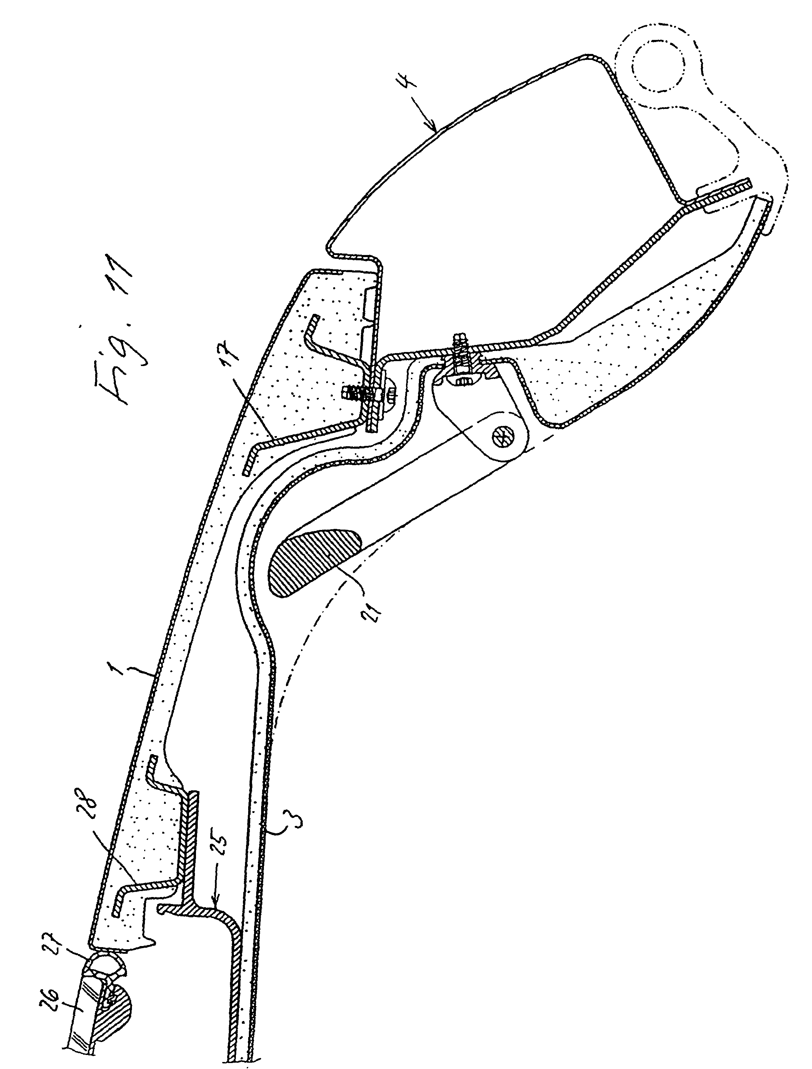

Ein weiteres, nicht zur Erfindung gehörendes Fahrzeugdach ist in Fig. 13 dargestellt und entspricht im wesentlichen dem schon unter Bezugnahme auf die Fig. 3 bis 5 ausführlich beschriebenen Fahrzeugdach. Im Unterschied dazu besitzt hier das Fahrzeugdach keine feste Dachhaut. Hier besteht das Fahrzeugdach im wesentlichen aus einem harten schalenförmig geformten Schaumkunststoff mit glatter lackierbarer Außenfläche. Selbstverständlich können in den Schaumkunststoff noch zusätzliche in Querrichtung aber auch in Längsrichtung geführte Verstärkungen eingebettet sein. Die Innenschale 2 ist zugleich Außenschale.

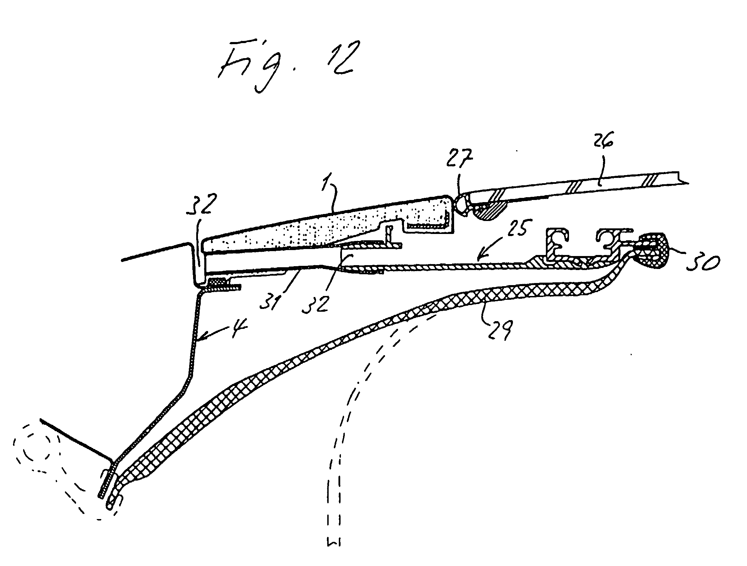

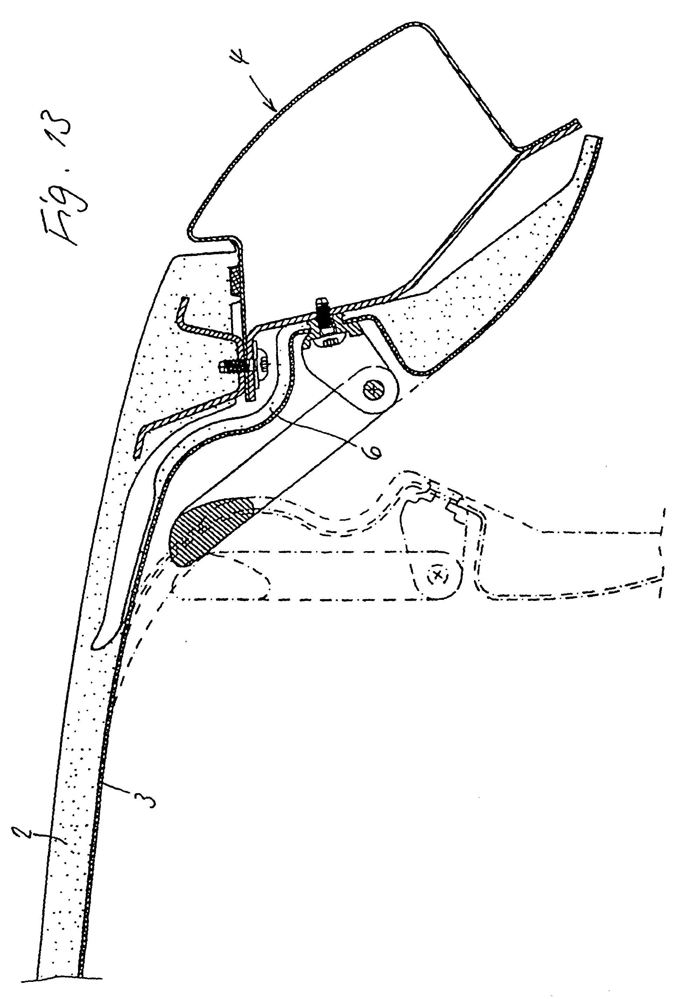

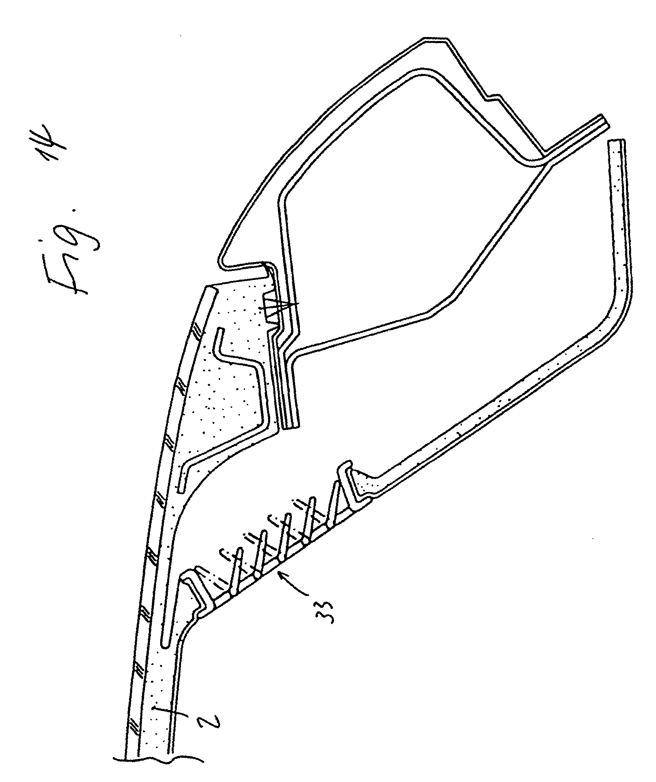

Ein weiteres, nicht zur Erfindung gehörendes Fahrzeugdach ist schließlich den Fig. 14 und 15 zu entnehmen. Dieses unterscheidet sich nicht grundsätzlich von dem mit Bezug auf die Fig. 3 bis 5 beschriebenen Dach, mit der Ausnahme, daß hier die dünne Dachhaut 1 ersetzt ist durch eine dickere aus einem transparenten Kunststoff oder Glas gebildete Dachhaut. In diesen Fig. ist aber auch dargestellt, daß an der unteren Schicht 6 nicht nur Sonnenblenden oder Haltegriffe vormontiert werden können, sondern auch Lüftungsgitter 33 (Fig. 14) und sogar Airbags 34 (Fig. 15). Entsprechendes gilt auch für das mit Bezug auf die Fig. 9 bis 12 beschriebene Fahrzeugdach Hierbei sind dann die vormontierten Elemente wie Sonnenblenden, Haltegriffe, Lüftungsgitter, stoßabsorbierende Sicherheitselemente, Airbags und dgl. an der Innenschale 29 vormontiert.

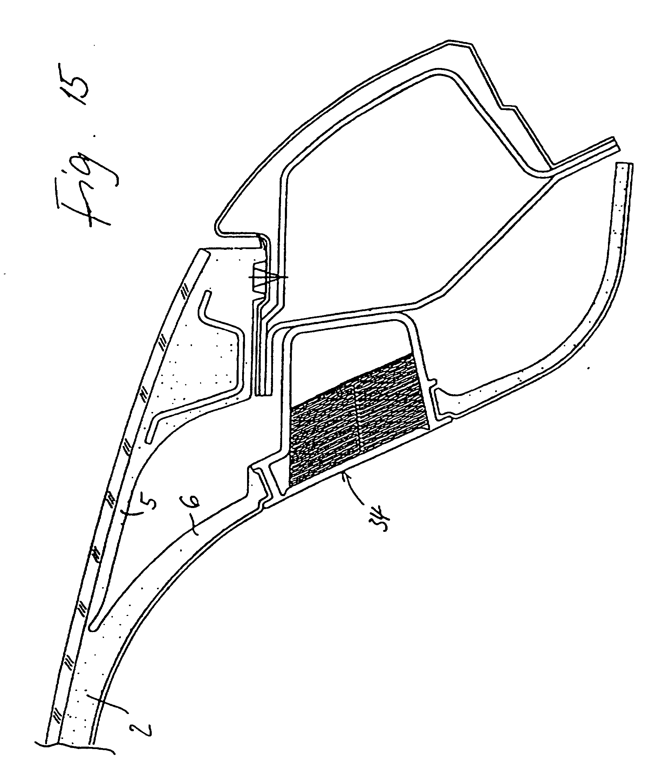

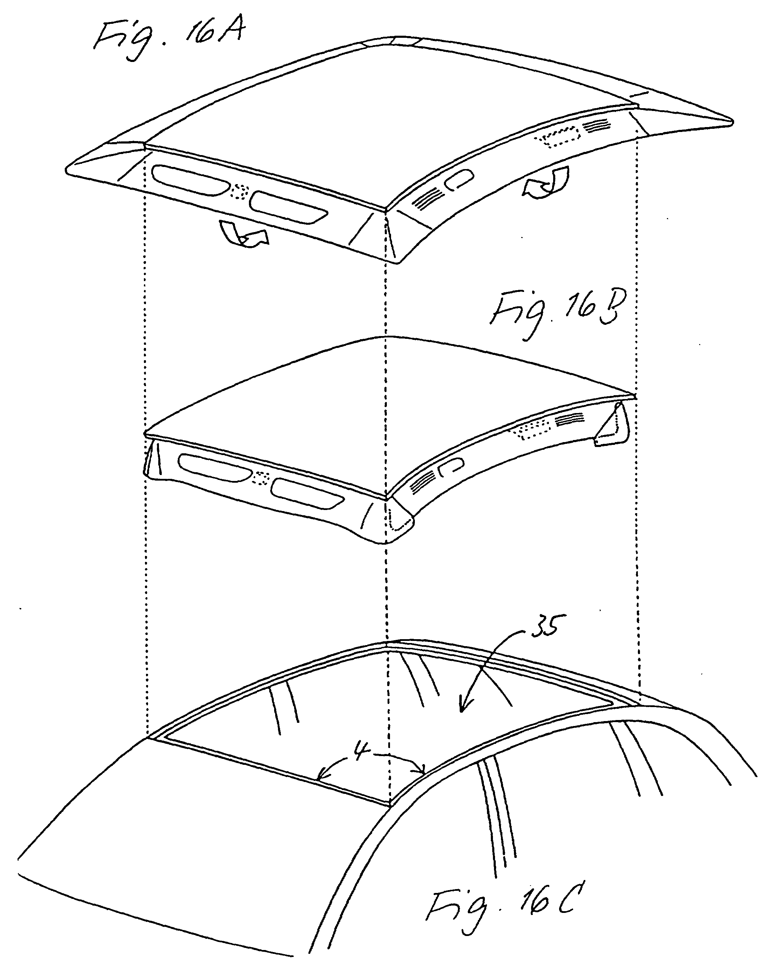

Das Montageverfahren für das beschriebene Fahrzeugdach (ebenfalls nicht Bestandteil der Erfindung), das für alle Ausführungsformen des Fahrzeugdachs gleich ist, wird nachfolgend anhand der Fig. 16A bis 16C beschrieben. Das getrennt von der übrigen Fahrzeugkarosserie hergestellte Fahrzeugdach mit allen seinen an der Innenschale vormontierten Elementen hat zunächst etwa das in Fig. 16A dargestellte Aussehen. Deutlich sind die über den Außenrand des Fahrzeugdachs vorstehenden Bereiche der Innenschale zu erkennen. Nunmehr wird die über die Außenränder des Fahrzeugdachs überstehende Innenschale bzw. die untere Schicht der Innenschale unter partieller Faltung in den Eckbereichen nach unten umgebogen, wie das Pfeile in Fig. 16A verdeutlichen. Hierbei erfolgt eine nichtbleibende Deformation und in den Eckbereichen auch eine partielle Faltung der überstehenden Innenschale bzw. der unteren Schicht der Innenschale. Danach hat das Fahrzeugdach etwa die in Fig. 16B dargestellte Form eingenommen. Zur Erleichterung des Einführens der nun gewissermaßen schürzenähnlich herabhängenden Bereiche der Innenschale bzw. der unteren Schicht der Innenschale in die von dem Karosserierahmen 4 gebildete Karosserieöffnung 35 können die herabhängenden Bereiche und damit die umgebogene Lage dieser Bereiche vorübergehend durch ein umfänglich herumgelegtes Band, eine Schnur od. dgl. fixiert werden. Nach dem Aufsetzen des Fahrzeugdachs auf den Karosserierahmen 4 erfolgt zunächst die Befestigung des Fahrzeugdachs am Karosserierahmen, wobei die vorübergehende Fixierung noch beibehalten werden kann. Danach wird die Fixierung ggf. aufgehoben, die Innenschale bzw. die untere Schicht der Innenschale mit ihren zur Verkleidung des Karosserierahmens 4 ausgebildeten Bereichen zurückgebogen, an die nach unten bzw. innen weisenden Flächen des Karosserierahmens angelegt und schließlich ebenfalls am Karosserierahmen befestigt, wie das im einzelnen anhand der Schnittdarstellungen erläutert worden ist.

Entsprechend dem beschriebenen Verfahren zur Montage des Fahrzeugdachs an einem Karosserierahmen ist also vorgesehen, daß
(a) die über die Außenränder des Fahrzeugdachs überstehende Innenschale bzw. die untere Schicht der Innenschale unter partieller Faltung in den Eckbereichen nach unten umgebogen wird,
(b) das Fahrzeugdach unter Durchtritt der umgebogenen Bereiche der Innenschale durch den Karosserierahmen 4 hindurch mit seinen Außenrändern von oben dem Karosserierahmen 4 aufgelegt und daran befestigt wird, und
(c) die Innenschale mit ihren zur Verkleidung des Karosserierahmens 4 ausgebildeten Bereichen zurückgebogen, an die nach unten bzw. innen weisenden Flächen des Karosserierahmens 4 angelegt und dann am Karosserierahmen 4 befestigt wird.

Das Montageverfahren läßt sich dabei noch weiter dadurch verbessern, daß die umgebogene Lage der davon betroffenen Bereiche der Innenschale vorübergehend fixiert wird und die Fixierung nach Durchtritt der umgebogenen Bereiche durch den Karosserierahmen 4 und Befestigung des Fahrzeugdachs an dem Karosserierahmen 4 aufgehoben wird. Für die vorübergehende Fixierung ist es beispielsweise ausreichend, wenn die nach unten umgebogenen Bereiche der Innenschale durch ein um diese Bereiche von außen herumgelegtes flexibles Band oder ein Seil od. dgl. zusammengeschnürt werden.

Allen beschriebenen Fahrzeugdächern ist gemeinsam, daß das Fahrzeugdach mit einer vorgeformten den Dachhimmel bildenden Innenschale 2 ausgebildet ist mit der Besonderheit, daß diese über die Außenränder des Fahrzeugdachs allseits übersteht, auch an den Ecken, d.h. größer ist als die Innenabmessungen der von den Holmen oder Profilen des geschlossenen Karosserierahmens 4 begrenzten Karosserieöffnung 35, und daß der Dachhimmel an den überstehenden Bereichen so flexibel oder elastisch ist, daß er für den Durchtritt durch die von dem Karosserierahmen 4 begrenzte Karosserieöffnung 35 unter partieller Faltung in den Eckbereichen nach unten ohne bleibende Deformation umbiegbar und zur Verkleidung des Karosserierahmens 4 ausgebildet ist. Die überstehenden Bereiche des Dachhimmels bilden somit die Verkleidungen für die Dachrahmenprofile, so daß zusätzliche Abdeckleisten und Abdeckprofile auch an den Ecken nicht erforderlich sind. Das getrennt hergestellte Fahrzeugdach bringt in einteiliger Ausbildung schon alle Elemente mit, die nach dem Aufsetzen und Befestigen des Fahrzeugdachs auf den bzw. an dem Karosserierahmen 4 zur Verkleidung der Sichtflächen des Karosserierahmens 4 erforderlich sind. Dabei geht der eigentliche Dachhimmel fugenlos in seine der Dachrahmenverkleidung dienenden Bereiche über. Infolge der Einteiligkeit des modulartig getrennt hergestellten Fahrzeugdachs mit den Verkleidungsbereichen seines Himmels werden daher nicht nur kurze Montagezeiten am Endmontageband ermöglicht, sondern darüber hinaus eine fugenlose harmonische Gestaltung des gesamten Dachhimmels auch in seinen Übergangsflächen zu den verglasten Flächen der Kraftfahrzeugkarosserie, d.h. zu der Windschutzscheibe, den Seitenfenstern und dem Heckfenster, und auch in seinen Eckbereichen erzielt.

Das Fahrzeugdach, bei dem die Innenschale 2 im Bereich der zur Auflage auf den Karosserierahmen 4 vorgesehenen Außenränder in zwei Schichten 5, 6 aufgeteilt ist, von denen die obere Schicht 5 auf den Karosserierahmen 4 auflegbar ist, während die untere Schicht 6 über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 ausgebildet ist (Fig. 3 bis 5 und 13), ist in zwei varianten möglich. Zum einen kann es mit einer äußeren Dachhaut 1, vorzugsweise einer starren Dachhaut, die beispielsweise aus Stahlblech geformt ist, versehen sein (Fig. 3 bis 5), zum anderen kann es aus einem geeigneten Hartschaum ohne äußere Dachhaut geformt sein (Fig. 13). Im letzteren Fall läßt sich die Außenseite so lackieren wie Karosserieblech.

Das Fahrzeugdach, bei dem die Innenschale 2 außen mit einer starren Dachhaut 1 versehen ist, deren Außenränder zur Auflage auf den Karosserierahmen 4 vorgesehen sind, während die unterhalb der Dachhaut 1 befindliche Innenschale 2 im Bereich der Auflage auf den Karosserierahmen 4 nicht mit der Dachhaut 1 verbunden ist, über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 ausgebildet ist (Fig. 6 bis 8), setzt dagegen das Vorhandensein einer starren Dachhaut 1 voraus, deren Außenränder unmittelbar, d.h. ohne zwischenliegende Schaumschicht, auf den Dachrahmen auflegbar und daran zu befestigen sind.

Das Fahrzeugdach, bei dem der als Innenschale 29 vorgeformte Dachhimmel mit Abstand zu einer starren Dachhaut 1 an einem unterhalb der Dachhaut befestigten Schiebedachrahmen 25 angebracht ist, über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 und des Schiebedachrahmens 25 ausgebildet ist (Fig. 9 bis 12), kann schließlich mit einer bereits funktionsfähig vormontierten Schiebedacheinheit versehen sein. Der als Innenschale 29 vorgeformte Dachhimmel ist hierbei an der Unterseite des Schiebedachrahmens 25 befestigt. Die Innenfläche der Dachhaut 1 kann in den an die Schiebedachöffnung angrenzenden Bereichen zur Verbesserung der Schall- und Wärmeisolation zusätzlich mit Schaumstoff beschichtet sein.

Für die Formung der Innenschale 2, 29 eignen sich PUR-Schaumstoffe, die für die vorliegenden Zwecke ausreichend flexibel oder sogar elastisch einstellbar sind. Sollknickstellen, die das vorübergehende Umbiegen nach unten und die Faltung an den vier Ecken des Fahrzeugdachs erleichtern, können vorgesehen sein. So kann die aus einem PUR-Schaumstoff geformte Innenschale 2, 29 an den Umbiegungs- oder Knickstellen auf der der Himmelfläche abgelegenen Seite mit kerbenähnlichen Vertiefungen 24 versehen sein (Fig. 6). Für diejenigen Bereiche der Innenschale 2, für die eine Flexibilität nicht erforderlich ist, können auch härtere Schaumstoffe zur Anwendung gelangen. Dies gilt insbesondere für den Fall, daß das Fahrzeugdach keine starre tragende Außenhaut 1 aufweist.

Weiterhin können die nach unten umbiegbaren Bereiche der Innenschale 2, 29 an den dafür geeigneten Orten mit mindestens einem vormontierten Element aus der aus Sonnenblenden 12 (Fig. 3 und 6), Haltegriffen 21 (Fig. 5 und 11), Lüftungsgittern 33 (Fig. 14), Innenleuchten, stoßabsorbierenden Sicherheitselementen 23 (Fig. 4 und 5), Airbags 34 (Fig. 15) und dgl. bestehenden Gruppe bzw. mit vorbereiteten Anbringungsorten für mindestens eines dieser Elemente versehen sein. Hierdurch wird der Montageaufwand am Montageband noch weiter vereinfacht, weil sich entweder die betreffenden Elemente leicht an dafür vorgesehenen Stellen anbringen lassen oder sogar schon an dem modulartigen Fahrzeugdach vormontiert vorhanden sind.

Im Interesse einer möglichst umfassenden Vorfertigung des Fahrzeugdachs ohne das Erfordernis nachträglicher Anpassungsarbeiten an den Karosserierahmen 4 können vorteilhaft die Außenränder der nach unten umbiegbaren Bereiche der Innenschale 2, 29 zur Befestigung an Flanschrändern des Karosserierahmens 4 mittels Kunststoffprofilstreifen, Keder od. dgl. 15 entsprechend paßgerecht beschnitten bzw. vorgeformt sein (Fig. 4 und 7). Ein so vorbereitetes Fahrzeugdach kann an allen vier Seiten ohne weiteres mit dem Karosserierahmen 4 vereinigt werden.

Soll das Fahrzeugdach ausschließlich oder zusätzlich zu Schraubverbindungen durch Kleben mit dem Karosserierahmen 4 vereinigt werden, so sind die Dachränder zweckmäßig so zu gestalten, daß sie in ihren zur Auflage auf den Karosserierahmen 4 vorgesehenen Bereichen mit im Schaumstoff eingeformten Aufnahmenuten 7 für Klebstoff versehen sind (Fig. 3 und 4).

Die Dachränder können in ihren zur Auflage auf den Karosserierahmen 4 vorgesehenen Bereichen mit in den Schaumstoff eingebetteten Verstärkungsteilen 17 versehen sein (Fig. 5 und 11), die für eine Aussteifung des Fahrzeugdachs sorgen und damit nicht nur der Transport- und Handhabungsfähigkeit des vormontierten Fahrzeugdachs, sondern auch zu seiner Versteifung nach der Montage am Karosserierahmen 4 dienen. Die hierfür vorgesehenen im Schaumstoff eingebetteten Verstärkungsteile 17 müssen nicht vollständig vom Schaumstoff umhüllt sein, sondern können mit ihren unteren Flächen freiliegen, so daß sie dem Karosserierahmen 4 unmittelbar zur Befestigung flächig aufgelegt werden können bzw. mit ihrer unteren Fläche unmittelbar flächig anliegen.

Bei der Ausbildung des Fahrzeugdachs mit Schiebedach wird über den Randspalt zwischen der festen Dachhaut 1 und dem Schiebedeckel 26 eintretendes und von dem Schiebedachrahmen 25 aufgefangenes Wasser nach außen abgeleitet, wozu ein im Eckbereich des Schiebedachrahmens 25 in die an der Unterseite der festen Dachhaut 1 angebrachten Schaumschicht eingebettetes Schlauch- oder Rohrstück 31 vorgesehen ist (Fig. 12), das einerseits auf eine Abflußtülle 32 des Schiebedachrahmens 25 dicht aufgesteckt ist und andererseits mit einer Öffnung an der Außenkante des Fahrzeugdachs endet. Zweckmäßig mündet das Schlauch- oder Rohrstück 31 an der Außenkante des Fahrzeugdachs in eine Wasserablauffuge, die zwischen dem Außenrand der Dachhaut 1 und der ihm zugekehrten Fläche des Karosserierahmens 4 gebildet ist.

## Patentansprüche

1. Fahrzeugdach, insbesondere Kraftfahrzeugdach, das sandwichartig mit einer Dachhaut (1) ausgebildet, getrennt von einer Fahrzeugkarosserie herstellbar, mit seinen Dachrändern auf einen Karosserierahmen (4) auflegbar und mit diesem fest verbindbar ist, **dadurch gekennzeichnet, daß** die zur Aufnahme eines Schiebedeckels (26) mit einer Dachöffnung versehene Dachhaut (1) mit einem Schaumkunststoff ausgeschäumt ist, wobei in der Schaumschicht ein Schlauch- oder Rohrstück (31) eingebettet ist, mittels dessen über den Randspalt zwischen der Dachhaut (1) und dem Schiebedeckel (26) eintretendes und von einem unterhalb der Dachhaut (1) befestigten Schiebedachrahmen (25) aufgefangenes Wasser nach außen ableitbar ist, wobei das Schlauch- oder Rohrstück (31) einerseits auf eine Abflußtülle (32) des Schiebedachrahmens (25) dicht aufgesteckt ist und andererseits mit einer Öffnung an der Außenkante des Fahrzeugdachs endet, und wobei das Schlauch- oder Rohrstück (31) an der Außenkante des Fahrzeugdachs in eine Wasserablauffuge mündet, die zwischen einem Außenrand der Dachhaut (1) und der ihm zugekehrten Fläche des Karosserierahmens (4) gebildet ist.

2. Fahrzeugdach nach Anspruch 1, **dadurch gekennzeichnet, daß** das Schlauch- oder Rohrstück (31) in einem Eckbereich des Schiebedachrahmens (25) in der an der Dachhaut (1) angebrachten Schaumschicht eingebettet ist.

3. Fahrzeugdach nach Anspruch 1, **dadurch gekennzeichnet, daß** in der an der Dachhaut (1) angebrachten Schaumschicht ein die Dachöffnung umgebender Verstärkungsrahmen (28) eingebettet ist, an dem der Schiebedachrahmen (25) befestigt ist.

4. Fahrzeugdach nach Anspruch 3, **dadurch gekennzeichnet, daß** der Schiebedachrahmen (25) nur einen Flansch mit einer im wesentlichen ebenen, im wesentlichen horizontalen Fläche aufweist, die an einer unteren und ebenen Fläche des Verstärkungsrahmens (28) unmittelbar flächig anliegt und der Befestigung des Schiebedachrahmens (25) an dem Verstärkungsrahmen (28) dient.

5. Fahrzeugdach nach Anspruch 1, **dadurch gekennzeichnet, daß** es sich bei dem Schaumkunststoff um einen PUR-Schaumstoff handelt.

## Claims

1. Vehicle roof, particularly motor vehicle roof, constructed in sandwich-like manner with a roof membrane, which is manufacturable separately from a vehicle body, which can be placed with its roof edges on a body frame (4) and is firmly connectable thereto, **characterized in that** the roof membrane (1) provided with a roof opening for receiving a sliding cover (26) is foamed with a foam material and in the foam layer is embedded a hose or tube portion (31) by means of which it is possible to lead downwards water entering via the marginal gap between the roof membrane (1) and the sliding cover (26) and trapped by a sliding cover frame (25) fixed below the roof membrane (1), the hose or tube portion (31) being on the one hand tightly engaged on a discharge bush (32) of the sliding cover frame (25) and on the other terminates with an opening on the outer edge of the vehicle roof, the hose or tube portion (31) issuing at the outer edge of the vehicle roof in a water draining gap formed between an outer edge of the roof membrane (1) and the surface of the body frame (4) facing the latter.

2. Vehicle roof according to claim 1, **characterized in that** the hose or tube portion (31) is embedded in the foam layer fitted to the roof membrane (1) in a corner region of the sliding cover frame (25).

3. Vehicle roof according to claim 1, **characterized in that** in the foam layer fitted to the roof membrane (1) is embedded a reinforcing frame (28) surrounding the roof opening and to which is fixed the sliding cover frame (25).

4. Vehicle roof according to claim 3, **characterized in that** the sliding cover frame (25) has only one flange with a substantially planar, substantially horizontal surface, which engages in a directly flat manner on a lower, planar surface of the reinforcing frame (28) and serves to fix the sliding cover frame (25) to the reinforcing frame (28).

5. Vehicle roof according to claim 1, **characterized in that** the foam material is a PUR foam.

## Revendications

1. Toit de véhicule, en particulier toit de véhicule automobile qui, formé d'une couverture (1) selon une construction sandwich, est apte à être fabriqué séparément d'une carrosserie, est apte à être posé avec ses bords sur un cadre de carrosserie (4) et est apte à être relié solidement à celui-ci, **caractérisé en ce que** la couverture (1) pourvue d'une ouverture de toit en vue de recevoir un couvercle coulissant (26) est recouverte d'une matière plastique alvéolaire, étant précisé qu'il est prévu, encastré dans la couche de mousse, un élément en forme de tuyau ou de tube (31) grâce auquel l'eau qui entre par l'interstice du bord, entre la couverture (1) et le couvercle coulissant (26), et qui est recueillie par un châssis de toit coulissant (25) fixé au-dessous de ladite couverture (1) peut être évacuée vers l'extérieur, l'élément en forme de tuyau ou de tube (31) étant enfilé, d'un côté, de manière étanche sur un bec d'écoulement (32) du châssis de toit coulissant (25), et se terminant de l'autre côté par une ouverture sur le bord extérieur du toit de véhicule, et ledit élément en forme de tuyau ou de tube (31) débouchant, sur l'arête extérieure du toit de véhicule, dans une rainure d'écoulement d'eau qui est définie entre un bord extérieur de la couverture (1) et la surface du cadre de carrosserie (4) tournée vers ce bord extérieur.

2. Toit de véhicule selon la revendication 1, **caractérisé en ce que** l'élément en forme de tuyau ou de tube (31) est encastré, dans une zone d'angle du châssis de toit coulissant (25), dans la couche de mousse prévue sur la couverture (1).

3. Toit de véhicule selon la revendication 1, **caractérisé en ce qu'**il est prévu, dans la couche de mousse prévue sur la couverture (1), un châssis de renforcement (28) qui entoure l'ouverture prévue du toit et auquel est fixé le châssis de toit coulissant (25).

4. Toit de véhicule selon la revendication 3, **caractérisé en ce que** le châssis de toit coulissant (25) ne présente qu'une aile, pourvue d'une surface globalement plane et globalement horizontale, qui est appliquée directement à plat contre une surface inférieure et plane du châssis de renforcement (28) et qui sert à la fixation du châssis de toit coulissant (25) au châssis de renforcement (28).

5. Toit de véhicule selon la revendication 1, **caractérisé en ce que** la matière plastique alvéolaire est une mousse PUR.
